(19) Europäisches Patentamt
European Patent Office
Office européen des brevets

(11) EP 3 029 935 A1

(12) EUROPEAN PATENT APPLICATION

(43) Date of publication:
08.06.2016 Bulletin 2016/23

(51) Int Cl.:
*H04N 13/04* (2006.01)

(21) Application number: 15197521.6

(22) Date of filing: 02.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 03.12.2014 CN 201410728142

(71) Applicant: Shenzhen Estar Technology Group Co.,
Ltd
Guangdong 518057 (CN)

(72) Inventors:
• LIU, Meihong
518057 Shenzhen (CN)
• GAO, Wei
518057 Shenzhen (CN)
• XU, Wanliang
518057 Shenzhen (CN)

(74) Representative: Office Kirkpatrick
Avenue Wolfers, 32
1310 La Hulpe (BE)

(54) **HOLOGRAPHIC DISPLAYING METHOD AND DEVICE BASED ON HUMAN EYES TRACKING**

(57) A holographic displaying method and device based on human eyes tracking are disclosed. The holographic displaying method includes the following steps of: tracking human eyes of a viewer in real time and acquiring an image of the human eyes (101); determining whether coordinates of the both eyes can be determined according to the tracked image of the human eyes (102); and decreasing a transforming depth of field of the displayed 3D image when the coordinates of the both eyes cannot be determined according to the tracked image of the human eyes (103). In the aforesaid way, the present disclosure allows users to view clear 3D images even if the camera cannot track positions of the human eyes clearly.

Tracking human eyes of a viewer in real time and acquiring an image of the human eyes — 101

Determining whether coordinates of the both eyes can be determined according to the tracked image of the human eyes — 102

Decreasing a transforming depth of field of the displayed 3D image when the coordinates of the both eyes cannot be determined according to the tracked image of the human eyes — 103

FIG. 1

EP 3 029 935 A1

# Description

## FIELD

The present disclosure generally relates to the technical field of holographic displaying, and more particularly, to a holographic displaying method and device based on human eyes tracking.

## BACKGROUND

To view an object clearly, two processes are generally required, i.e., locating a distance from the practically viewed object and acquiring a clear image of the object on the retina. The two processes are generally called eyeball convergence and eyeball adjustment respectively. Eyeball adjustment refers to the process of acquiring a clear image of the object by eyeballs through changing the focus. Eyeball convergence refers to the process of imaging the object on the retina right at the macular central fovea, i.e., the process of locating a position or a depth of field of the object by the eyes.

In order to enable human eyes to acquire clear holographically displayed images when people are watching images on a holographic displaying screen, a holographic displaying device acquires positions of the human eyes via a camera and further adjusts the 3D images according to the positions of the human eyes so that a user can enjoy the 3D images even if his/her position has changed.

However, it cannot be ensured that the 3D images displayed by the holographic displaying device of the prior art can be viewed clearly by the user at any position. That is, there is an optimal viewing range, and if the user is out of this range, he/she cannot enjoy the clear 3D images. Moreover, when the external light changes, e.g., when it gets dark or the camera is blocked or damaged, the existing holographic displaying device cannot satisfy requirements of the user any more.

## SUMMARY

A primary technical problem to be solved by the present disclosure is to provide a holographic displaying method and device based on human eyes tracking that enable users to view clear 3D images even if the camera cannot track positions of the human eyes clearly.

To solve the aforesaid technical problems, a technical solution adopted by the present disclosure is to provide an adaptive holographic displaying method based on human eyes tracking, and the method comprises the following steps of:

> tracking human eyes of a viewer in real time and acquiring an image of the human eyes;
> determining whether coordinates of the both eyes can be determined according to the tracked image of the human eyes; and

decreasing a transforming depth of field of the displayed 3D image when the coordinates of the both eyes cannot be determined according to the tracked image of the human eyes.

In one embodiment, the method further comprises the following steps after the step of decreasing the transforming depth of field of the displayed 3D image when the coordinates of the both eyes cannot be determined according to the tracked image of the human eyes:

> determining, according to the tracked image of the human eyes, the reason why the coordinates of the both eyes cannot be obtained; and
> displaying a piece of prompt information that indicates the reason.

In one embodiment, the method further comprises the following step when the coordinates of the both eyes can be determined according to the tracked image of the human eyes:

> determining the coordinates of the both eyes according to the tracked image of the human eyes and increasing the transforming depth of field of the displayed 3D image.

In one embodiment, the step of the determining the coordinates of the both eyes according to the tracked image of the human eyes and increasing the transforming depth of field of the displayed 3D image is specifically as follows:

> determining first coordinate information and second coordinate information of the both eyes relative to a screen according to the tracked image of the human eyes;
> detecting a first distance from a central position between the both eyes to a central position of the screen;
> obtaining a second distance between the both eyes according to the first coordinate information and the second coordinate information;
> determining an angle of the central position between the both eyes relative to the screen according to the first distance and the second distance; and
> determining a depth-of-field parameter by use of a 3D interleaving algorithm according to the angle, changing offsets of a left view and a right view of the displayed image according to the depth-of-field parameter, and increasing the transforming depth of field of the displayed 3D image.

In one embodiment, the step of the determining the angle of the both eyes relative to the screen according to the first distance and the second distance is specifically as follows:

determining an angle of the central position between the both eyes relative to the screen by use of the

formula $\theta = 2 * \tan^{-1} \dfrac{L}{2 * Z}$ according to the first distance and the second distance;

where $\theta$ is the angle of the central position between the both eyes relative to the screen, L is the second distance between the both eyes, and Z is the first distance from the central position between the both eyes to the central position of the screen.

In one embodiment, the step of the decreasing the transforming depth of field of the displayed 3D image when the coordinates of the both eyes cannot be determined according to the tracked image of the human eyes comprises:

determining a depth-of-field parameter by use of a 3D interleaving algorithm, changing offsets of a left view and a right view of the displayed 3D image according to the depth-of-field parameter, and decreasing the transforming depth of field of the displayed 3D image.

To solve the aforesaid technical problem, another technical solution adopted by the present disclosure is to provide a holographic displaying device, which comprises a tracking module, a controlling module and a depth-of-field adjusting module, wherein:

the tracking module is configured to track human eyes of a viewer in real time and acquire an image of the human eyes;
the controlling module is configured to determine whether coordinates of the both eyes can be determined according to the tracked image of the human eyes; and
the depth-of-field adjusting module is configured to decrease a transforming depth of field of the displayed 3D image when the coordinates of the both eyes cannot be determined according to the tracked image of the human eyes.

In one embodiment, the controlling module is further configured to determine, according to the tracked image of the human eyes, the reason why the coordinates of the both eyes cannot be obtained; and
the holographic displaying device further comprises a displaying module configured to display a piece of prompt information that indicates the reason.

In one embodiment, the depth-of-field adjusting module is further configured to increase the transforming depth of field of the displayed 3D image when the coordinates of the both eyes are determined according to the image of the human eyes tracked by the tracking module.

In one embodiment, the depth-of-field adjusting module is specifically configured to determine a depth-of-field parameter by use of a 3D interleaving algorithm and change offsets of a left view and a right view of the displayed image according to the depth-of-field parameter so as to decrease the transforming depth of field of the displayed 3D image.

As compared to the prior art, the present disclosure has the following benefits: the present disclosure tracks human eyes of a viewer in real time and acquires an image of the human eyes; determines whether coordinates of the both eyes can be determined according to the tracked image of the human eyes; and decreases a transforming depth of field of the displayed 3D image when the coordinates of the both eyes cannot be determined according to the tracked image of the human eyes. In this way, the human eyes can view clear 3D images and user experiences are improved.

**BRIEF DESCRIPTION OF THE DRAWINGS**

Implementations of the present technology will now be described, by way of example only, with reference to the attached figures, wherein:

FIG. 1 is a schematic flowchart diagram of a holographic displaying method based on human eyes tracking according to an embodiment of the present disclosure.
FIG. 2 is a schematic structural view of a holographic displaying system according to an embodiment of the present disclosure.
FIG. 3 is a schematic flowchart diagram of a holographic displaying method based on human eyes tracking according to another embodiment of the present disclosure.
FIG. 4 is a schematic flowchart diagram of a holographic displaying method based on human eyes tracking according to yet another embodiment of the present disclosure.
FIG. 5 is a schematic flowchart diagram of a holographic displaying method based on human eyes tracking according to yet a further embodiment of the present disclosure.
FIG. 6 is a schematic structural view of a holographic displaying device according to an embodiment of the present disclosure.
FIG. 7 is a schematic structural view of a holographic displaying device according to another embodiment of the present disclosure.

**DETAILED DESCRIPTION**

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. Also, the description is not to be considered as limiting the scope of the embodiments described herein. The drawings are not necessarily to scale and the proportions of certain parts have been exaggerated to better illustrate details and features of the present disclosure.

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

Several definitions that apply throughout this disclosure will now be presented.

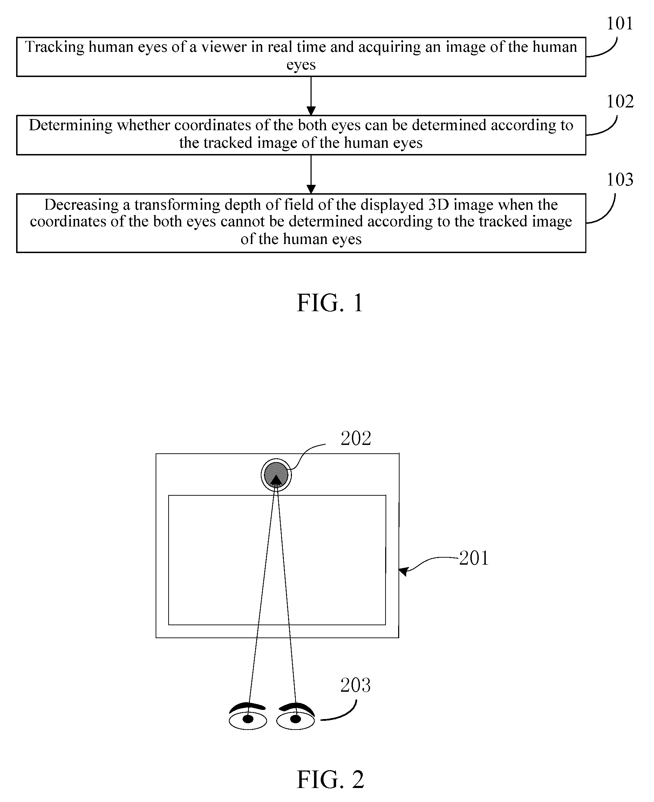

Referring to FIG. 1, FIG. 1 is a schematic flowchart diagram of a holographic displaying method based on human eyes tracking according to an embodiment of the present disclosure. The holographic displaying method of this embodiment comprises the following steps of:

101: Tracking human eyes of a viewer in real time and acquiring an image of the human eyes.

In order to adjust holographically displayed images correspondingly according to positions of the human eyes, a holographic displaying device generally acquires the image of the human eyes via a camera. As shown in FIG. 2, a holographic displaying system of this embodiment comprises a holographic displaying device 201 and a camera 202. The camera 202 is disposed at the front end of the holographic displaying device 201 and electrically connected to the holographic displaying device 201, and is configured to acquire an image 203 of the human eyes. The positions of the camera 202 and the holographic displaying device 201 in FIG. 2 are merely relative positions and are not limited thereto.

The holographic displaying device 201 generally includes common large-scale holographic displaying devices (e.g., a 3D projector) and also includes 3D smart mobile terminals (e.g., a 3D smart phone), and no limitation is made thereto as long as the device can display 3D images. The type of the camera is not limited either, and the camera may be, e.g., a camera disposed at the front end of a 3D projector or a front-facing camera of a smart phone.

102: Determining whether coordinates of the both eyes can be determined according to the tracked image of the human eyes.

Firstly, the holographic displaying device determines whether the camera can operate normally. If the current camera is damaged or fails to work temporarily, it is directly determined that the image of the human eyes cannot be tracked currently, i.e., the coordinates of the both eyes of a viewer cannot be determined.

If the current camera can operate normally, the holographic displaying device further determines whether the camera can acquire the image, i.e., further determines whether the camera is blocked (e.g., whether the camera is blocked by a finger or other items when the 3D images are displayed on a smart terminal). If the camera cannot acquire the image, the holographic displaying device cannot determine the coordinates of the both eyes of the viewer.

In another embodiment, the value of the light intensity in the external environment will directly influence the definition of the 3D image enjoyed by the viewer, so the holographic displaying device further determines whether the value of the light intensity in the current external environment is within a preset light intensity threshold value according to the image of the human eyes when the image of the human eyes can be acquired via the camera. If the value of the light intensity in the current external environment is not within the preset light intensity threshold value, e.g., the light of the current environment is too strong or too weak, the viewer cannot enjoy clear 3D images, and in this case, it is determined that the coordinates of the both eyes cannot be determined according to the tracked image of the human eyes.

When the camera can operate normally and the value of the light intensity in the external environment is within the preset light intensity threshold value, the holographic displaying device further determines whether a clear image of the human eyes can be tracked. Generally, cameras have a certain shooting distance and shooting angle, and when the viewer is beyond the shooting distance or the shooting angle of the camera (e.g., the farthest shooting distance of the camera is 50 meters, but the distance between the viewer and the camera is beyond 50 meters), the camera cannot track image of the human eyes of the viewer, i.e., the coordinates of the both eyes cannot be determined according to the image of the human eyes.

In yet another embodiment, even if the viewer is within the shooting distance and the shooting angle of the camera, i.e., even if the image of the human eyes can be tracked, the holographic displaying device still cannot determine the coordinates of the both eyes of the viewer according to the tracked image of the human eyes because the viewer is not within the effective range of the shooting distance and the shooting angle of the camera, e.g., the viewer is too far from the camera or includes a too large angle with the normal line of the camera, or the human face looks too small for the camera or includes a too large angle with the normal line of the camera.

Specifically, in other embodiments, the holographic displaying device determines first coordinate information and second coordinate information of the both eyes relative to a screen according to the image of the human eyes, and the first coordinate information and the second coordinate information are space coordinate information relative to the screen. In a preferred embodiment, a central position of the screen is taken as a coordinate origin. In other embodiments, other positions, e.g., any position on the screen, may also be taken as the coordinate origin and no limitation is made thereto. A central position between the both eyes of the viewer is determined according to the first coordinate information and the second coordinate information.

Further speaking, the holographic displaying device detects a first distance from the central position between the both eyes to the central position of the screen. Preferably, the holographic displaying device detects the first distance through an infrared distance meter. In other embodiments, the distance may also be detected in other ways and no limitation is made thereto.

The holographic displaying device further obtains a second distance between the both eyes according to the first coordinate information and the second coordinate information, and determines an angle of the central position between the both eyes relative to the screen according to the first distance and the second distance.

Specifically, the angle of the central position between the both eyes relative to the screen is determined by use of the formula $\theta = 2 * \tan^{-1} \dfrac{L}{2 * Z}$; where $\theta$ is the angle of the central position between the both eyes relative to the screen, L is the second distance between the both eyes, and Z is the first distance from the central position between the both eyes to the central position of the screen.

After obtaining the first distance and the angle of the central position between the both eyes relative to the screen, the holographic displaying device determines whether the first distance and the angle of the central position between the both eyes relative to the screen are within the effective range of the shooting distance and the shooting angle respectively; and if either is determined to be beyond the corresponding effective range, then the holographic displaying device determines that the coordinates of the both eyes cannot be determined according to the tracked image of the human eyes.

It shall be appreciated that, the aforesaid embodiments in which coordinates of the both eyes cannot be tracked are only illustrative rather than restrictive. In other embodiments, any case where the camera cannot acquire definite coordinates of the both eyes shall be regarded to be within the claimed scope of the present disclosure, and no limitation is made thereto.

> 103: decreasing a transforming depth of field of the displayed 3D image when the coordinates of the both eyes cannot be determined according to the tracked image of the human eyes.

Specifically, the holographic displaying device determines a depth-of-field parameter by use of a 3D interleaving algorithm, changes offsets of a left view and a right view of the displayed image according to the depth-of-field parameter, and decreases the transforming depth of field of the 3D image.

When the human eyes are viewing an object, the object is imaged onto eyeballs according to the principle of light propagation, and then the image is transmitted to the brain so that we can see the image of the object. However, when the object is removed, the impression of the object on the optic nerve will not disappear immediately, but instead, it will last for about 0.1 s, and this phenomenon of the human eyes is called duration of vision of eyes.

Specifically, a 3D image is generally expressed in the unit of frames, and each frame of the 3D image comprises a left image and a right image captured from different angles. When the 3D image is displayed, the left image and the right image are displayed alternatively, and the left eye and the right eye of the viewer receive the left image and the right image respectively. When the left-eye data image and the right-eye data image switch within a preset time, the right-eye data image slightly different from the left-eye data image appears before the impression of the left-eye data image has disappeared due to the duration of vision of the left eye, and then the brain combines the two images together to achieve a 3D visual effect.

Therefore, after the depth-of-field parameter is determined by use of the 3D interleaving algorithm, the transforming depth of field of the 3D image is decreased by reducing the offsets of the left view and the right view of the displayed image according to the depth-of-field parameter so that the viewer can enjoy the image more clearly.

As compared to the prior art, the present disclosure tracks human eyes of a viewer in real time and acquires an image of the human eyes; determines whether coordinates of the both eyes can be determined according to the tracked image of the human eyes; and decreases a transforming depth of field of the displayed 3D image when the coordinates of the both eyes cannot be determined according to the tracked image of the human eyes so that the human eyes can see clear 3D image, thereby improving user experiences.

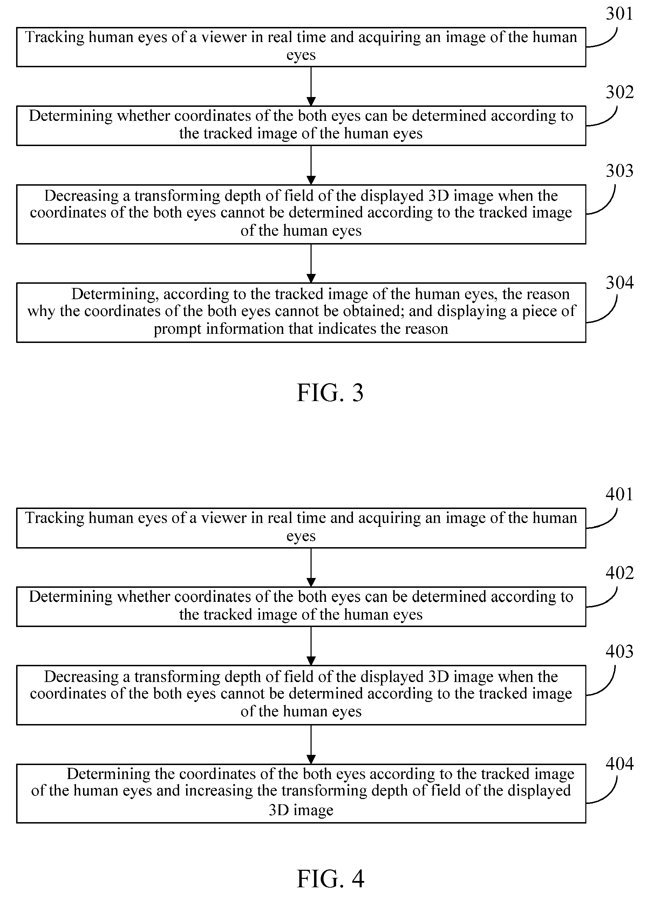

Referring to FIG. 3, FIG. 3 is a schematic flowchart diagram of an adaptive holographic displaying method based on human eyes tracking according to another embodiment of the present disclosure.

This embodiment differs from the last embodiment in that, the method further comprises a step 304 after a step 303 of decreasing a transforming depth of field of the displayed 3D image when the holographic displaying device cannot determine the coordinates of the both eyes according to the tracked image of the human eyes.

304: Determining, according to the tracked image of the human eyes, the reason why the coordinates of the both eyes cannot be obtained; and displaying a piece of prompt information that indicates the reason.

Specifically, when the holographic displaying device cannot determine the coordinates of the both eyes, the reason why the coordinates of the both eyes cannot be obtained is further determined. For example, firstly, it is determined whether the camera has acquired the image of the human eyes, and if the camera has not acquired the image of the human eyes, then the reason for this is further determined. For example, it is determined whether the camera is damaged, whether the current camera is blocked, whether the value of the light intensity in the current external environment is not within the preset light intensity threshold value, or whether the viewer is beyond of the shooting distance and the shooting angle of the camera.

If the current camera can acquire the image of the human eyes but cannot determine the coordinates of the both eyes according to the acquired image of the human eyes, then the holographic displaying device further determines the reason why the coordinates of the both eyes cannot be determined. For example, the viewer is within the shooting distance and the shooting angle of the camera but is beyond the effective range of the shooting distance or the shooting angle of the camera. Thus, although the camera can track the image of the human eyes, the holographic displaying device still cannot determine the coordinates of the both eyes of the viewer according to the image of the human eyes because the viewer is beyond the effective range of the shooting distance and the shooting angle of the camera, e.g., the viewer is too far from the camera or includes a too large angle with the normal line of the camera, or the human face looks too small for the camera or includes a too large angle with the normal line of the camera.

It shall be appreciated that, the aforesaid embodiments in which coordinates of the both eyes cannot be tracked are only illustrative rather than restrictive. In other embodiments, any case where the camera cannot acquire definite coordinates of the both eyes shall be regarded to be within the claimed scope of the present disclosure, and no limitation is made thereto.

Further speaking, after having determined the reason why the coordinates of the both eyes cannot be determined, the holographic displaying device displays a piece of prompt information that indicates the reason on the screen thereof to prompt the user to make corresponding adjustment according to the reason.

For example, if the coordinates of the both eyes cannot be determined because the camera is damaged, then a prompt message of "Camera Failure" is displayed on the screen. If the reason is that the camera is blocked, then a prompt tone of "Camera Blocked by Object" is displayed on the screen. If the reason is that the value of the light intensity in the current environment is not within the preset light intensity threshold value, then a prompt message of "Dark Using Environment" is displayed on the screen. If the coordinates of the both eyes cannot be acquired according to the image of the human eyes because of an inappropriate viewing distance or angle, then a prompt tone of "Far Viewing Distance" or "Inappropriate Viewing Angle" is displayed, and no limitation is made thereto.

Furthermore, the holographic displaying method of this embodiment further comprises steps 301~303. The steps 301~303 are the same as the steps 101~103 of the last embodiment, so reference may be made to FIG. 1 and the description thereof and these will not be further described herein.

As compared to the prior art, the holographic displaying method of this embodiment decreases a transforming depth of field of the displayed 3D image when the holographic displaying device cannot determine the coordinates of the both eyes according to the tracked image of the human eyes so that the human eyes can see clear 3D image, thereby improving user experiences.

This embodiment differs from the last embodiment in that, after decreasing the transforming depth of field of the displayed 3D image, the holographic displaying method further determines the reason why the coordinates of the both eyes cannot be obtained and displays a piece of prompt information that indicates the reason to prompt the viewer to make corresponding adjustment according to the prompt information. In this way, the viewer can see more effective and clearer 3D image and user experiences are improved.

Referring to FIG. 4, FIG. 4 is a schematic flowchart diagram of a holographic displaying method based on human eyes tracking according to another embodiment of the present disclosure.

The adaptive displaying method of this embodiment differs from the adaptive displaying method of the first embodiment in that, it further comprises a step 404 after the holographic displaying device decreases the transforming depth of field of the displayed 3D image because the coordinates of the both eyes cannot be determined according to the tracked image of the human eyes.

404: Determining the coordinates of the both eyes according to the tracked image of the human eyes and increasing the transforming depth of field of the displayed 3D image.

After decreasing the transforming depth of field of the displayed 3D image, the holographic displaying device does not stop acquiring the image of the human eyes but keeps acquiring the image of the human eyes in real time via the camera and further executes the step of determining whether the coordinates of the both eyes can be determined according to the tracked image of the human eyes.

When the coordinates of the both eyes can be determined according to the tracked image of the human eyes, the holographic displaying device increases the transforming depth of field of the displayed 3D image and restores it to the original displayed image.

Specifically, the holographic displaying device determines first coordinate information and second coordinate information of the both eyes relative to a screen according to the image of the human eyes, and the first coordinate information and the second coordinate information are space coordinate information relative to the screen. In a preferred embodiment, a central position of the screen is taken as a coordinate origin. In other embodiments, other positions, e.g., any position on the screen, may also be taken as the coordinate origin, and no limitation is made thereto. A central position between the both eyes of the viewer is determined according to the first coordinate information and the second coordinate information.

Further speaking, the holographic displaying device detects a first distance from the central position between the both eyes to the central position of the screen. Preferably, the holographic displaying device detects the first distance through an infrared distance meter. In other embodiments, the distance may also be detected in other ways and no limitation is made thereto.

The holographic displaying device further obtains a second distance between the both eyes according to the first coordinate information and the second coordinate information, and determines an angle of the central position between the both eyes relative to the screen according to the first distance and the second distance.

Specifically, the angle of the central position between the both eyes relative to the screen is determined by use of the formula $\theta = 2 * \tan^{-1} \dfrac{L}{2 * Z}$.

A depth-of-field parameter is determined by use of a 3D interleaving algorithm according to the angle, and the offsets of a left view and a right view of the displayed image is increased according to the depth-of-field parameter so as to increase the transforming depth of field of the 3D image.

The holographic displaying method of this embodiment further comprises steps 401~403. The steps 401~403 are the same as the steps 101~103 of the first embodiment, so reference may be made to FIG. 1 and the description thereof and these will not be further described herein.

As compared to the prior art, the holographic displaying method of this embodiment decreases the transforming depth of field of the displayed 3D image when the holographic displaying device cannot determine the coordinates of the both eyes according to the tracked image of the human eyes so that the human eyes can see clear 3D image, thereby improving user experiences.

This embodiment differs from the first embodiment in that, after decreasing the transforming depth of field of the displayed 3D image, the holographic displaying method continues to track the image of the human eyes, determines the coordinates of the both eyes according to the tracked image of the human eyes after the image of the human eyes is tracked and increases the transforming depth of field of the displayed 3D image so as to restore the displayed 3D image to the original displaying effect. In this way, the viewer can see more effective and clearer 3D image and user experiences are improved.

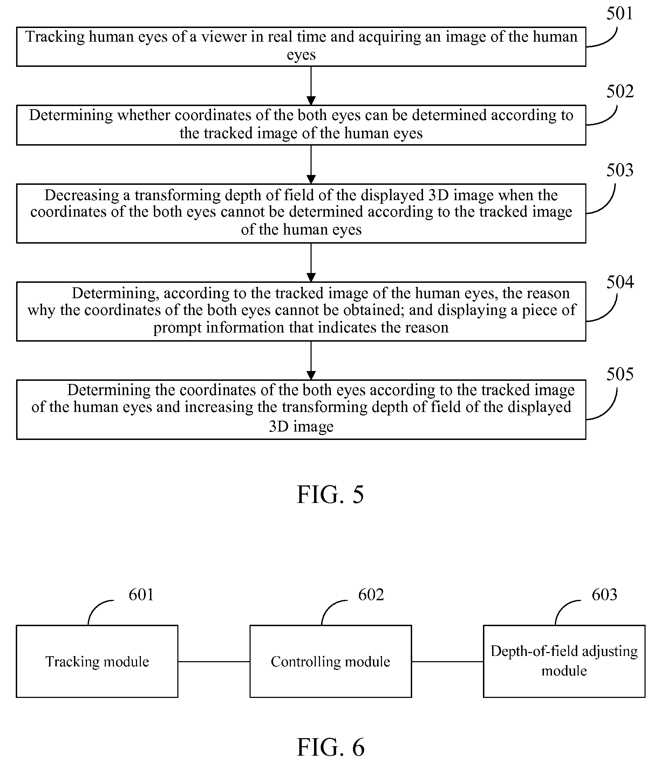

Another embodiment is as shown in FIG. 5, which is a schematic flowchart diagram of a holographic displaying method based on human eyes tracking according to the another embodiment of the present disclosure.

This embodiment differs from the last embodiment in that, before a step 505 of determining the coordinates of the both eyes according to the tracked image of the human eyes and increasing the transforming depth of field of the displayed 3D image, this embodiment further comprises a step 504 of: determining the reason why the coordinates of the both eyes cannot be obtained according to the tracked image of the human eyes; and displaying a piece of prompt information that indicates the reason.

For example, if the coordinates of the both eyes cannot be determined because the camera is damaged, then a prompt message of "Camera Failure" is displayed on the screen. If the reason is that the camera is blocked, then a prompt tone of "Camera Blocked by Object" is displayed on the screen. If the reason is that the value of the light intensity in the current environment is not within the preset light intensity threshold range, then a prompt message of "Using Environment Being Dark" is displayed on the screen. If the coordinates of the both eyes cannot be acquired according to the image of the human eyes because of an inappropriate viewing distance or angle, then a prompt tone of "Far Viewing Distance" or "Inappropriate Viewing Angle" is displayed, and no limitation is made thereto.

As compared to the prior art, the holographic displaying method of this embodiment decreases a transforming depth of field of the displayed 3D image when the holographic displaying device cannot determine the coordinates of the both eyes according to the tracked image of the human eyes so that the human eyes can see clear 3D image, thereby improving user experiences. After decreasing the transforming depth of field of the displayed 3D image, the holographic displaying method continues to track the image of the human eyes, determines the coordinates of the both eyes according to the tracked image of the human eyes after the image of the human eyes is tracked and increases the transforming depth of field of the displayed 3D image so as to restore the displayed 3D image to the original displaying effect. In this way, the viewer can see a more effective and clearer 3D image.

This embodiment differs from the last embodiment in that, after decreasing the transforming depth of field of the displayed 3D image, the 3D displaying method further determines the reason why the coordinates of the both eyes cannot be obtained and displays a piece of prompt information that indicates the reason so that the viewer can be prompted to make corresponding adjustment according to the prompt information. In this way, the viewer can see a more effective and clearer 3D image and user experiences are improved.

Referring to FIG. 6, FIG. 6 is a schematic structural view of a holographic displaying device according to an embodiment of the present disclosure. The holographic displaying device of this embodiment comprises a tracking module 601, a controlling module 602 and a depth-of-field adjusting module 603.

The tracking module 601 is configured to track human eyes of a viewer in real time and acquire an image of the human eyes.

In order to adjust the holographic displaying image correspondingly according to the positions of the human eyes, generally the tracking module 601 of the holographic displaying device acquires the image of the human eyes via a camera.

The holographic displaying device generally includes common large-scale holographic displaying devices (e.g., a 3D projector) and also includes 3D smart mobile terminals (e.g., a 3D smart phone), and no limitation is made thereto as long as the device can display 3D images. The type of the camera is not limited either, and the camera may be, e.g., a camera disposed at the front end of a 3D projector or a front-facing camera of a smart phone.

The controlling module 602 is configured to determine whether coordinates of the both eyes can be determined according to the tracked image of the human eyes.

Firstly, the controlling module 602 determines whether the camera can operate normally. If the current camera is damaged or fail to work temporarily, it is directly determined that the image of the human eyes cannot be tracked currently, i.e., the coordinates of the both eyes of the viewer cannot be determined.

If the current camera can operate normally, the controlling module 602 further determines whether the camera can acquire the image, i.e., further determines whether the camera is blocked (e.g., whether the camera is blocked by a finger or other items when the 3D images are displayed on a smart terminal). If the camera cannot acquire the image, the controlling module 602 cannot determine the coordinates of the both eyes of the viewer.

In another embodiment, the value of the light intensity in the external environment will directly influence the definition of the 3D image enjoyed by the viewer, so the controlling module 602 further determines whether the value of the light intensity in the current external environment is within a preset light intensity threshold range according to the image of the human eyes when the image of the human eyes can be acquired via the camera. If the value of the light intensity in the current external environment is not within the preset light intensity threshold range (e.g., the light of the current environment is too strong or too weak), the viewer cannot enjoy clear 3D image, and in this case, the controlling module 602 determines that the coordinates of the both eyes cannot be determined according to the tracked image of the human eyes.

When the camera can operate normally and the value of the light intensity in the external environment is within the preset light intensity threshold range, the controlling module 602 further determines whether a clear image of the human eyes can be tracked. Generally, cameras have a certain shooting distance and shooting angle, and when the viewer is beyond the shooting distance or the shooting angle of the camera (e.g., the farthest shooting distance of the camera is 50 meters, but the distance between the viewer and the camera is beyond 50 meters), the camera cannot track the image of the human eyes of the viewer, i.e., the controlling module 602 cannot determine the coordinates of the both eyes according to the image of the human eyes.

In yet another embodiment, even if the viewer is within the shooting distance and the shooting angle of the camera, i.e., even if the image of the human eyes can be tracked, the controlling module 602 still cannot determine the coordinates of the both eyes of the viewer according to the image of the human eyes because the viewer is not within the effective range of the shooting distance and the shooting angle of the camera, e.g., the viewer is too far from the camera or includes a too large angle with the normal line of the camera, and the human face looks too small for the camera or includes a too large angle with the normal line of the camera.

Specifically, in other embodiments, the controlling module 602 determines first coordinate information and second coordinate information of the both eyes relative to a screen according to the image of the human eyes, and the first coordinate information and the second coordinate information are space coordinate information relative to the screen. In a preferred embodiment, a central position of the screen is taken as a coordinate origin. In other embodiments, other positions, e.g., any position on the screen, may also be taken as the coordinate origin, and no limitation is made thereto. A central position between the both eyes of the viewer is determined according to the first coordinate information and the second coordinate information.

Further speaking, the controlling module 602 detects a first distance from the central position between the both eyes to the central position of the screen. Preferably, the controlling module 602 detects the first distance through an infrared distance meter. In other embodiments, the distance may also be detected in other ways and no limitation is made thereto.

The controlling module 602 further obtains a second distance between the both eyes according to the first coordinate information and the second coordinate information, and determines an angle of the central position of the both eyes relative to the screen according to the first distance and the second distance.

Specifically, the controlling module 602 determines the angle of the central position of the both eyes relative to the screen according to the formula

$$\theta = 2 * \tan^{-1}\frac{L}{2 * Z}$$ where $\theta$ is the angle of the central position between the both eyes relative to the screen, L is the second distance between the both eyes, and Z is the first distance from the central position between the both eyes to the central position of the screen.

After obtaining the first distance and the angle of the central position between the both eyes relative to the screen, the controlling module 602 determines whether the first distance and the angle of the central position between the both eyes relative to the screen are within the effective range of the shooting distance and the shooting angle respectively; and if either is determined to be beyond the corresponding effective range, the controlling module 602 determines that the coordinates of the both eyes cannot be determined according to the tracked image of the human eyes.

It shall be appreciated that, the aforesaid embodiments in which coordinates of the both eyes cannot be tracked are only illustrative rather than restrictive. In other embodiments, any case where the camera cannot acquire definite coordinates of the both eyes shall be regarded to be within the claimed scope of the present disclosure, and no limitation is made thereto.

The depth-of-field adjusting module 603 is configured to decrease the transforming depth of field of the displayed 3D image when the coordinates of the both eyes cannot be determined according to the tracked image of the human eyes.

Specifically, the depth-of-field adjusting module 603 determines a depth-of-field parameter by use of a 3D interleaving algorithm, changes offsets of a left view and a right view of the displayed image according to the depth-of-field parameter and decreases the transforming depth of field of the 3D image.

When the human eyes are viewing an object, the object is imaged onto eyeballs according to the principle of light propagation, then the image is transmitted to the brain so that we can see the image of the object. However, when the object is removed, the impression of the object on the optic nerve will not disappear immediately, but instead, it will last for about 0.1 s, and this phenomenon of the human eyes is called duration of vision of eyes.

Specifically, a 3D image is generally expressed in the unit of frames, and each frame of the 3D image comprises a left image and a right image captured from different angles. When the 3D image is displayed, the left image and the right image are displayed alternatively, and the left eye and the right eye of the viewer receive the left image and the right image respectively. When the left-eye data image and the right-eye data image switch within a preset time, the right-eye data image slightly different from the left-eye data image appears before the impression of the left-eye data image has disappeared due to the duration of vision of the left eye, and then the brain combines the two images together to achieve a 3D visual effect.

Therefore, after determining the depth-of-field parameter by use of the 3D interleaving algorithm, the depth-of-field adjusting module 603 reduces the offsets of the left view and the right view of the displayed image according to the depth-of-field parameter to decrease the transforming depth of field of the 3D image so that the viewer can enjoy the image more clearly.

As compared to the prior art, the tracking module of the present disclosure tracks human eyes of a viewer in real time and acquires an image of the human eyes; the controlling module determines whether coordinates of the both eyes can be determined according to the tracked image of the human eyes; and the depth-of-field adjusting module decreases a transforming depth of field of the displayed 3D image when the controlling module cannot determine the coordinates of the both eyes according to the tracked image of the human eyes so that the human eyes can see clear 3D image, thereby improving user experiences.

In another embodiment, the tracking module is further configured to continue to track the image of the human eyes after the depth-of-field adjusting module decreases the depth of field of the displayed 3D image because the controlling module cannot determine the coordinates of the both eyes according to the image of the human eyes tracked by the tracking module. When the controlling module can determine the coordinates of the both eyes according to the image of the human eyes tracked by the tracking module, the depth-of-field adjusting module further increases the transforming depth of field of the displayed 3D image to restore it to the originally displayed image.

Specifically, the controlling module determines first coordinate information and second coordinate information of the both eyes relative to a screen according to the image of the human eyes, and the first coordinate information and the second coordinate information are space coordinate information relative to the screen. In a preferred embodiment, a central position of the screen is taken as a coordinate origin. In other embodiments, other positions, e.g., any position on the screen, may also be taken as the coordinate origin, and no limitation is made thereto. A central position between the both eyes of the viewer is determined according to the first coordinate information and the second coordinate information.

Further speaking, the holographic displaying device detects a first distance from the central position between the both eyes to the central position of the screen. Preferably, the holographic displaying device detects the first distance through an infrared distance meter. In other embodiments, the distance may also be detected in other ways and no limitation is made thereto.

The controlling module further obtains a second distance between the both eyes according to the first coordinate information and the second coordinate information, and determines an angle of the central position between the both eyes relative to the screen according to the first distance and the second distance.

Specifically, the controlling module determines the angle of the central position between the both eyes relative to the screen according to the formula

$$\theta = 2 * \tan^{-1} \frac{L}{2*Z}.$$

The depth-of-field adjusting module determines a depth-of-field parameter by use of a 3D interleaving algorithm according to the angle, and increase the offsets of a left view and a right view of the displayed image according to the depth-of-field parameter so as to increase the transforming depth of field of the 3D image.

As compared to the prior art, when the controlling module of the holographic displaying device of this embodiment cannot determine the coordinates of the both eyes according to the image of the human eyes tracked by the tracking module, the depth-of-field adjusting module decreases the transforming depth of field of the displayed 3D image so that the human eyes can see a clear 3D image, thereby improving user experiences.

This embodiment differs from the previous embodiment in that, after the depth-of-field adjusting module decreases the transforming depth of field of the displayed 3D image, the tracking module continues to track the image of the human eyes, and the controlling module determines the coordinates of the both eyes according to the tracked image of the human eyes after the image of the human eyes is tracked. Further speaking, the depth-of-field adjusting module increases the transforming depth of field of the displayed 3D image so as to restore the displayed 3D image to the original displaying effect. In this way, the viewer can see a more effective and clearer 3D image and user experiences are improved.

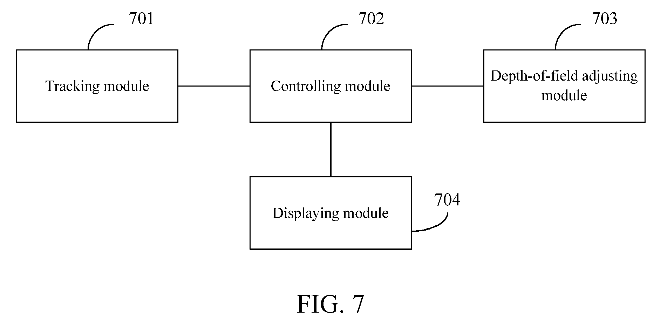

Another embodiment is shown in FIG. 7, which is a schematic structural view of a holographic displaying device according to another embodiment of the present disclosure. In addition to a tracking module 701, a controlling module 702 and a depth-of-field adjusting module 703 which are identical to those of the previous embodiment, the holographic displaying device of this embodiment further comprises a displaying module 704.

The displaying module 704 is configured to display a piece of prompt information that indicates the reason after the controlling module 702 determines, according to the image of the human eyes tracked by the tracking module 701, the reason why the coordinates of the both eyes cannot be obtained.

For example, if the coordinates of the both eyes cannot be determined because the camera is damaged, then a prompt message of "Camera Failure" is displayed on the screen. If the reason is that the camera is blocked, then a prompt tone of "Camera Blocked by Object" is displayed on the screen. If the reason is that the value of the light intensity in the current environment is not within the preset light intensity threshold range, then a prompt message of "Using Environment Being Dark" is displayed on the screen. If the coordinates of the both eyes cannot be acquired according to the image of the human eyes because of an inappropriate viewing distance or angle, then a prompt tone of "Far Viewing Distance" or "Inappropriate Viewing Angle" is displayed, and no limitation is made thereto.

It shall be appreciated that, the aforesaid embodiments in which coordinates of the both eyes cannot be tracked are only illustrative rather than restrictive. In other embodiments, any case where the camera cannot acquire definite coordinates of the both eyes shall be regarded to be within the claimed scope of the present disclosure, and no limitation is made thereto.

As compared to the prior art, when the controlling module of the holographic displaying device of this embodiment cannot determine the coordinates of the both eyes according to the image of the human eyes tracked by the tracking module, the depth-of-field adjusting module decreases the transforming depth of field of the displayed 3D image so that the human eyes can see a clear 3D image, thereby improving user experiences.

This embodiment differs from the first embodiment in that, after the transforming depth of field of the displayed 3D image is decreased, the controlling module of the holographic displaying device further determines the reason why the coordinates of the both eyes cannot be obtained, and the displaying module displays a piece of prompt information that indicates the reason. In this way, the viewer can be prompted to make corresponding adjustment according to the prompt information so that the viewer can see a more effective and clearer 3D image and user experiences are improved.

What described above are only some of the embodiments of the present disclosure, which are provided to facilitate understanding of the present disclosure but are not intended to limit the technical solutions of the present disclosure in any way or to exhaust all embodiments of the present disclosure. Accordingly, any modification or equivalent substitutions made to the technical solutions without departing from the spirits and scope of the present disclosure shall all be covered within the scope of the present disclosure.

**Claims**

1. A holographic displaying method based on human eyes tracking, **characterized in that** it comprises the following steps of:

tracking human eyes of a viewer in real time and acquiring an image of the human eyes (101); determining whether coordinates of the both eyes are determined according to the tracked image of the human eyes (102); and decreasing a transforming depth of field of a displayed 3D image when the coordinates of the both eyes are not determined according to the tracked image of the human eyes (103).

2. The method according to claim 1, **characterized in that** it further comprises the following steps after the step of the decreasing the transforming depth of field of the displayed 3D image when the coordinates of the both eyes are not be determined according to the tracked image of the human eyes (303):

determining, according to the tracked image of the human eyes, the reason why the coordinates of the both eyes are not be obtained; and displaying a piece of prompt information that indicates the reason (304).

3. The method according to claims 1 or 2, **characterized in that** it further comprises the following step when the coordinates of the both eyes are determined according to the tracked image of the human eyes:

determining the coordinates of the both eyes according to the tracked image of the human eyes and increasing the transforming depth of field of the displayed 3D image (404).

4. The method according to claim 3, **characterized in that** the determining the coordinates of the both eyes according to the tracked image of the human eyes and increasing the transforming depth of field of the displayed 3D image (404) comprises:

determining first coordinate information and second coordinate information of the both eyes relative to a screen according to the tracked image of the human eyes; detecting a first distance from a central position between the both eyes to a central position of the screen; obtaining a second distance between the both eyes according to the first coordinate information and the second coordinate information; determining an angle of the central position between the both eyes relative to the screen according to the first distance and the second distance; and determining a depth-of-field parameter by use of a 3D interleaving algorithm according to the angle, changing offsets of a left view and a right view of the displayed 3D image according to the depth-of-field parameter, and increasing the transforming depth of field of the displayed 3D image.

5. The method according to claim 4, **characterized in that** the determining the angle of the both eyes relative to the screen according to the first distance and the second distance comprises:

determining the angle of the central position between the both eyes relative to the screen by use of the formula $\theta = 2 * \tan^{-1} \dfrac{L}{2 * Z}$ according to the first distance and the second distance; wherein $\theta$ is the angle of the central position between the both eyes relative to the screen, L is the second distance between the both eyes, and Z is the first distance from the central position between the both eyes to the central position of the screen.

6. The method according to claim 1, **characterized in that** the decreasing the transforming depth of field of the displayed 3D image when the coordinates of the both eyes are not determined according to the tracked image of the human eyes comprises:

determining a depth-of-field parameter by use of a 3D interleaving algorithm, changing offsets of a left view and a right view of the displayed 3D image according to the depth-of-field parameter, and decreasing the transforming depth of field of the displayed 3D image.

7. A holographic displaying device, **characterized in that** it comprises a tracking module (601), a controlling module (602) and a depth-of-field adjusting module (603), wherein:

the tracking module (601) is configured to track human eyes of a viewer in real time and acquire an image of the human eyes; the controlling module (602) is configured to determine whether coordinates of the both eyes are determined according to the tracked image of the human eyes; and the depth-of-field adjusting module (603) is configured to decrease a transforming depth of field of a displayed 3D image when the coordinates of the both eyes are not determined according to the tracked image of the human eyes.

8. The holographic displaying device according to claim 7, **characterized in that** the controlling module (702) is further configured to determine, according to the tracked image of the human eyes, the reason why the coordinates of the both eyes are not obtained; and the holographic displaying device further comprises a displaying module (704) configured to display a piece of prompt information that indicates the reason.

9. The holographic displaying device according to claims 7 or 8, **characterized in that** the depth-of-field adjusting module (603;703) is further configured to increase the transforming depth of field of the displayed 3D image when the coordinates of the both eyes are determined according to the image of the human eyes tracked by the tracking module (601;602).

10. The holographic displaying device according to claim 7, **characterized in that** the depth-of-field adjusting module (603;703) is configured to determine a depth-of-field parameter by use of a 3D interleaving algorithm and change offsets of a left view and a right view of the displayed image according to the depth-of-field parameter so as to decrease the transforming depth of field of the displayed 3D image.

| | 101 |
|---|---|
| Tracking human eyes of a viewer in real time and acquiring an image of the human eyes | |

| | 102 |
|---|---|
| Determining whether coordinates of the both eyes can be determined according to the tracked image of the human eyes | |

| | 103 |
|---|---|
| Decreasing a transforming depth of field of the displayed 3D image when the coordinates of the both eyes cannot be determined according to the tracked image of the human eyes | |

FIG. 1

202

201

203

FIG. 2

301

Tracking human eyes of a viewer in real time and acquiring an image of the human eyes

302

Determining whether coordinates of the both eyes can be determined according to the tracked image of the human eyes

303

Decreasing a transforming depth of field of the displayed 3D image when the coordinates of the both eyes cannot be determined according to the tracked image of the human eyes

304

Determining, according to the tracked image of the human eyes, the reason why the coordinates of the both eyes cannot be obtained; and displaying a piece of prompt information that indicates the reason

FIG. 3

401

Tracking human eyes of a viewer in real time and acquiring an image of the human eyes

402

Determining whether coordinates of the both eyes can be determined according to the tracked image of the human eyes

403

Decreasing a transforming depth of field of the displayed 3D image when the coordinates of the both eyes cannot be determined according to the tracked image of the human eyes

404

Determining the coordinates of the both eyes according to the tracked image of the human eyes and increasing the transforming depth of field of the displayed 3D image

FIG. 4

501

| Tracking human eyes of a viewer in real time and acquiring an image of the human eyes |

502

| Determining whether coordinates of the both eyes can be determined according to the tracked image of the human eyes |

503

| Decreasing a transforming depth of field of the displayed 3D image when the coordinates of the both eyes cannot be determined according to the tracked image of the human eyes |

504

| Determining, according to the tracked image of the human eyes, the reason why the coordinates of the both eyes cannot be obtained; and displaying a piece of prompt information that indicates the reason |

505

| Determining the coordinates of the both eyes according to the tracked image of the human eyes and increasing the transforming depth of field of the displayed 3D image |

FIG. 5

601

| Tracking module |

602

| Controlling module |

603

| Depth-of-field adjusting module |

FIG. 6

701

Tracking module

702

Controlling module

703

Depth-of-field adjusting module

704

Displaying module

FIG. 7

Europäisches
Patentamt

European
Patent Office

Office européen
des brevets

## EUROPEAN SEARCH REPORT

Application Number

EP 15 19 7521

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/333532 A1 (OHBITSU TOSHIRO [JP]) 13 November 2014 (2014-11-13) | 1-3,7-9 | INV. H04N13/04 |
| Y | * paragraph [0044] - paragraph [0239] * | 4-6,10 | |
| X | EP 2 757 531 A1 (NEO MEDICAL SYSTEMS S A [LU]) 23 July 2014 (2014-07-23) | 1,3,7,9 | |
| A | * the whole document * | 4,5 | |
| Y | EP 2 445 223 A1 (SONY CORP [JP]) 25 April 2012 (2012-04-25) * paragraph [0028] - paragraph [0041]; figures 3-6 * | 4-6,10 | |
| A | EP 2 509 323 A2 (LG ELECTRONICS INC [KR]) 10 October 2012 (2012-10-10) * paragraph [0116] - paragraph [0196] * | 1-10 | |
| A | US 2014/225994 A1 (TUNG HSU-JUNG [TW]) 14 August 2014 (2014-08-14) * paragraph [0022] - paragraph [0036] * | 1,3-7,9, 10 | |
| A | CN 102 595 172 A (SICHUAN CHANGHONG ELECTRIC CO) 18 July 2012 (2012-07-18) * the whole document * | 1,3-7,9, 10 | TECHNICAL FIELDS SEARCHED (IPC) H04N G03H |

The present search report has been drawn up for all claims

| Place of search | Date of completion of the search | Examiner |
|---|---|---|
| Munich | 19 April 2016 | Gil Zamorano, Gunnar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 3 029 935 A1

### ANNEX TO THE EUROPEAN SEARCH REPORT
### ON EUROPEAN PATENT APPLICATION NO.

EP 15 19 7521

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2016

| Patent document cited in search report | | | Publication date | Patent family member(s) | | | Publication date |
|---|---|---|---|---|---|---|---|
| US 2014333532 | A1 | | 13-11-2014 | CN | 104160699 | A | 19-11-2014 |
| | | | | US | 2014333532 | A1 | 13-11-2014 |
| | | | | WO | 2013132601 | A1 | 12-09-2013 |
| EP 2757531 | A1 | | 23-07-2014 | EP | 2757531 | A1 | 23-07-2014 |
| | | | | LU | 92138 | A1 | 21-07-2014 |
| | | | | US | 2014240218 | A1 | 28-08-2014 |
| | | | | WO | 2014111572 | A1 | 24-07-2014 |
| EP 2445223 | A1 | | 25-04-2012 | CN | 102474644 | A | 23-05-2012 |
| | | | | EP | 2445223 | A1 | 25-04-2012 |
| | | | | JP | 5556394 | B2 | 23-07-2014 |
| | | | | JP | 2011259045 | A | 22-12-2011 |
| | | | | US | 2012148147 | A1 | 14-06-2012 |
| | | | | WO | 2011155330 | A1 | 15-12-2011 |
| EP 2509323 | A2 | | 10-10-2012 | EP | 2509323 | A2 | 10-10-2012 |
| | | | | KR | 20120115014 | A | 17-10-2012 |
| | | | | US | 2012257795 | A1 | 11-10-2012 |
| US 2014225994 | A1 | | 14-08-2014 | CN | 103986924 | A | 13-08-2014 |
| | | | | TW | 201433144 | A | 16-08-2014 |
| | | | | US | 2014225994 | A1 | 14-08-2014 |
| CN 102595172 | A | | 18-07-2012 | NONE | | | |

EPO FORM P0459

For more details about this annex : see Official Journal of the European Patent Office, No. 12/82